# EUROPÄISCHE PATENTSCHRIFT

(11) **EP 2 425 963 B1**
(45) Veröffentlichungstag und Bekanntmachung des Hinweises auf die Patenterteilung: **22.05.2013**
(21) Anmeldenummer: 11177543.3
(22) Anmeldetag: 15.08.2011
(51) Int. Cl.: B29D 30/26, B29D 30/00

(54) **Vorrichtung zum Halten und Transportieren eines Reifengürtels für die Herstellung eines Fahrzeugreifens**
Device for holding and transporting a tyre belt for producing a vehicle tyre
Dispositif de retenue et de transport d'une courroie de pneu pour la fabrication d'un pneu de véhicule

(30) Priorität: 01.09.2010 DE 102010037267
(43) Veröffentlichungstag der Anmeldung: 07.03.2012
(73) Patentinhaber: Continental Reifen Deutschland GmbH, 30165 Hannover (DE)
(72) Erfinder: Schulze, Norbert, 26427 Holtgast (DE)
(74) Vertreter: Finger, Karsten

(56) Entgegenhaltungen:
- DE-A1-102005 054 507
- JP-A- 61 127 337
- US-A- 3 865 670

## Beschreibung

Die Erfindung betrifft eine Vorrichtung zum Halten und Transportieren eines Reifengürtels für die Herstellung eines Fahrzeugreifens, gemäß dem Oberbegriff des Patentanspruchs 1.

Eine Vorrichtung dieser Art ist beispielsweise aus der JP-A-61-127 337 bekannt.

Bei der Reifenherstellung werden Aufbautrommeln für die Herstellung von Fahrzeugreifen eingesetzt. Dabei werden sogenannte Gürteltrageringe eingesetzt, für den Transport von der Gürteltrommel zur Bombierseite.

Die Gürteltrageringe übernehmen den Gürtel von der Gürteltrommel, um ihn dann auf der Bombierseite zu übergeben. Bei einem Wechsel der Reifendimensionsgröße muss der Gürteltragering entsprechend angepasst werden. Bei einer kleineren Reifendimension besitzt der Reifengürtel ebenfalls einen kleineren Durchmesserbereich. Bei herkömmlichen Vorrichtungen zum Herstellen von Fahrzeugreifen wird dann der komplette Gürteltragering ausgewechselt. Dieses Umrüsten ist mit einem relativ hohen Zeitaufwand verbunden. Außerdem müssen die dimensionsabhängigen Gürteltrageringe gelagert werden.

Die JP 61 127337 A, DE 10 2005 054507 A1 und US 3 865 670 A offenbaren herkömmliche Vorrichtungen zum Greifen und Transportieren von Reifengürteln.

Der Erfindung lag die Aufgabe zugrunde, eine Vorrichtung bereitzustellen, mit dem bei einem Dimensionswechsel der herzustellenden Fahrzeugreifen die Umrüstzeiten minimiert werden.

Gelöst wird die Aufgabe durch eine Vorrichtung gemäß Anspruch 1.

Ein Vorteil der Erfindung ist insbesondere darin zu sehen, dass die Vorrichtung nunmehr unterschiedliche Durchmesserbereiche für Fahrzeugreifen abdeckt. Dadurch entfällt das aufwendige Auswechseln der Segmente oder des Trageringes. Es können mit der gleichen Vorrichtung eine andere Reifendimension von Fahrzeugreifen hergestellt werden. Abhängig von der Reifendimension werden die einzelnen Segmente an den Segmentträgern entweder eingeschoben oder aber herausgezogen. Die damit verbundene Umrüstzeit ist erheblich kürzer als wenn die komplette Vorrichtung ausgetauscht werden müsste. Ein weiterer Vorteil besteht darin, dass die Lagerung von unterschiedlichen Vorrichtungen entfällt, die unterschiedliche Durchmesserbereiche abdecken.

Es ist erfindungsgemäß vorgesehen, dass das Führungselement im Wesentlichen die Form eines Quaders aufweist und im Segmentträger in radialer Richtung von einer eingefahrenen Position in eine ausgefahrene Position verschiebbar ist.
Das quaderförmige Führungselement bewirkt eine sichere und stabile Führung im Segmentträger.

Es ist erfindungsgemäß weiter vorgesehen, dass im Führungselement eine obere und untere Öffnung zur Aufnahme des Verriegelungselementes angeordnet sind.
Dadurch lassen sich die Segmente in zwei vorgegebenen Positionen fest mit dem Segmenträger verankern.

In einer vorteilhaften Weiterbildung der Erfindung ist vorgesehen, dass das Verriegelungselement ein Verriegelungsbolzen ist.

Mit dem Verriegelungsbolzen lässt sich die Verriegelung mit einer hohen Schnelligkeit durchführen.

In einer weiteren vorteilhaften Weiterbildung der Erfindung ist vorgesehen, dass der Verriegelungsbolzen eine Kugelsicherung zur Arretierung des Verriegelungsbolzen im Segmentträger aufweist.
Mit der Kugelsicherung wird der Bolzen schnell und sicher im Segmentträger verankert.

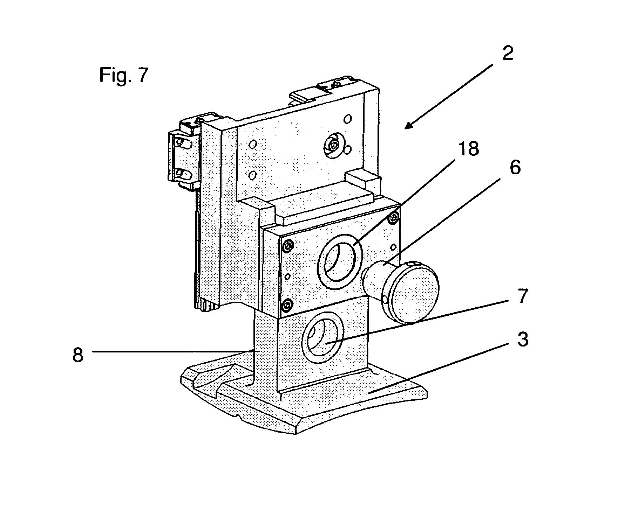

In einer weiteren vorteilhaften Weiterbildung der Erfindung ist vorgesehen, dass das Verriegelungselement eine Verriegelungsschraube ist und die Öffnungen im Segmentträger entsprechende Gewindebohrungen aufweisen.
Ein entsprechendes Ausführungsbeispiel ist in der Fig. 7 gezeigt. Der Einsatz einer Verriegelungsschraube ist eine kostengünstige Alternative zum Verriegelungsbolzen. Außerdem wird mit der Verschraubung ebenfalls eine hochfeste Verbindung zwischen dem Führungselement und dem Segmentträger geschaffen.

In einer weiteren vorteilhaften Weiterbildung der Erfindung ist vorgesehen, dass an der ringförmigen Haltevorrichtung ein Antrieb angeordnet ist, wobei mit dem Antrieb die Segmentträger mit den Segmenten in radialer Richtung verfahren werden.
Mit diesem Antrieb wird der Reifengürtel mit den Segmenten auf der entsprechenden Gürteltrommel gegriffen.

In einer weiteren vorteilhaften Weiterbildung der Erfindung ist vorgesehen, dass der Antrieb der Segmentträger zunächst wegabhängig mit einem Motor und anschließend kraftabhängig mit einem pneumatischen Antrieb erfolgt.
Durch diese Hubbewegung der Segmente bzw. Segmentträger wird der Gürtel auf der Gürteltrommel mit einer hohen Geschwindigkeit und mit einer hohen Genauigkeit gegriffen.

In einer weiteren vorteilhaften Weiterbildung der Erfindung ist vorgesehen, dass die Segmentträger Führungsschienen aufweisen, wobei über diese Führungsschienen die lineare Bewegung der Segmentträger in radialer Richtung geführt wird.
Diese Art der Führung gewährleistet eine hohe Genauigkeit und ausreichende Stabilität.

Anhand eines Ausführungsbeispiels soll die Erfindung näher erläutert werden. Es zeigen:
- Fig. 1: ein Ausführungsbeispiel der erfindungsgemäßen Vorrichtung,
- Fig. 2: die Vorrichtung mit den ausgefahrenen Segmenten,
- Fig. 3: die Vorrichtung, bei der die Segmente sich in der zweiten Segmentstellung befinden,
- Fig. 4: eine Teilansicht der Vorrichtung,
- Fig. 5: den erfindungsgemäßen Segmentträger mit dem Segment,
- Fig. 6.: den Segmentträger mit dem Segment in einer ausgefahrenen Position,
- Fig. 7: ein weiteres Ausführungsbeispiel mit einer Verriegelungsschraube.

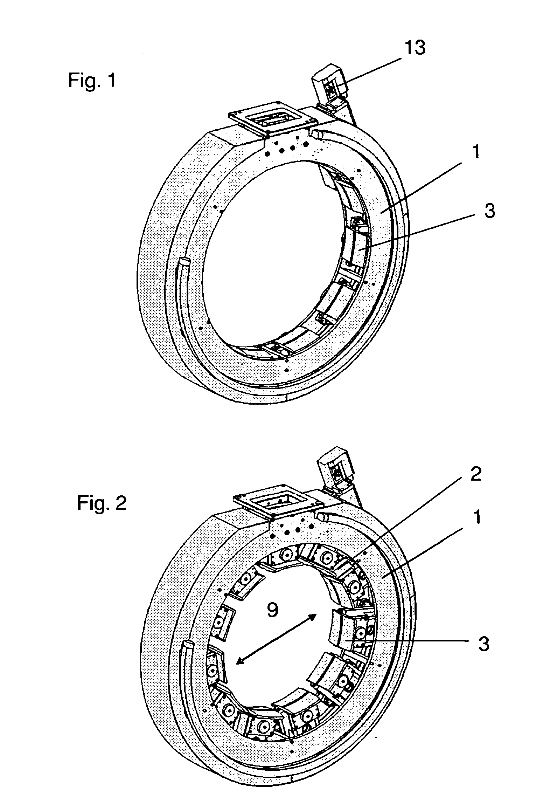

Die Fig. 1 zeigt ein Ausführungsbeispiel der erfindungsgemäßen Vorrichtung in einer dreidimensionalen Ansicht. Bei der Vorrichtung in Fig. 1 handelt es sich um einen sogenannten Gürteltragering, der die Aufgabe hat, den auf einer Gürteltrommel angeordneten Reifengürtel zu greifen und anschließend zur Bombierseite zu übergeben. Die ringförmige Haltevorrichtung 1 besteht im Wesentlichen aus einem ringförmigen Metallrahmen. In der ringförmigen Haltevorrichtung sind die Segmente 3 mit den Segmentträgern angeordnet. Die Segmentträger, die in der Fig. 1 nicht sichtbar sind, sind einzeln mit der Haltevorrichtung 1 verbunden. Das Bauteil 13 stellt den Antrieb dar, mit dem die Segmentträger in radialer Richtung verfahren werden, um den Gürtel auf der Gürteltrommel zu greifen. In dieser Darstellung sind die Segmente in der maximal eingefahrenen Position dargestellt.

Die Fig. 2 zeigt die Vorrichtung in einem Zustand, bei dem die Segmente an den Segmentträgern 2 nach radial innen ausgefahren sind.
In der dargestellten Position greifen die Segmente 3 den nicht dargestellten Gürtel auf einer entsprechenden Gürteltrommel. Während in der Fig. 1 die Segmente einen großen

Durchmesser umfassen, bilden die Segmente in der Fig. 2 einen kleineren Durchmesserbereich ab. Die Segmentträger 2 sind über Führungsschienen in radiale Richtung verschiebbar an der ringförmigen Haltevorrichtung 1 angeordnet.

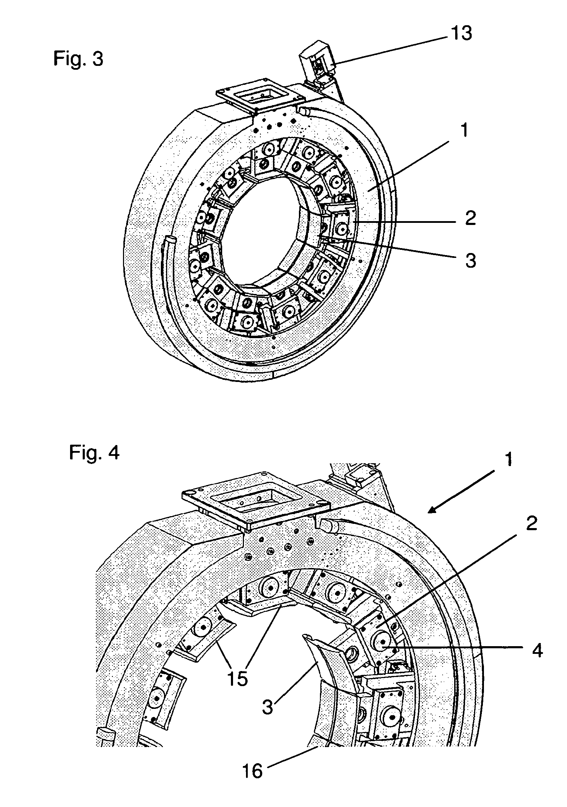

Die Fig. 3 zeigt die Vorrichtung in einem Zustand, bei dem die Segmente 3 sich in der zweiten Segmentstellung befinden. Dadurch umfassen die Segmente 3 einen wesentlichen kleineren Durchmesser als das in der Fig. 2 der Fall ist. In dem dargestellten Zustand wird die Vorrichtung dazu benutzt, Fahrzeugreifen mit einer kleineren Dimension herzustellen.

Die Fig. 4 zeigt die Vorrichtung beim Umrüsten der Segmente von der ersten Segmentstellung zur zweiten Segmentstellung. Die Segmente 15 befinden sich in der ersten Segmentstellung, bei der die Segmente sozusagen im Segmentträger eingefahren sind. Die Segmente 16 befinden sich in der zweiten Segmentstellung, bei der die Segmente 3 aus dem Segmentträger 2 ausgefahren sind. Das Umrüsten der Vorrichtung besteht also darin, die einzelnen Segmente 3 von der ersten Segmentstellung in die zweite Segmentstelle zu bringen und anschließend mit den Verriegelungselementen 4 zu verriegeln.

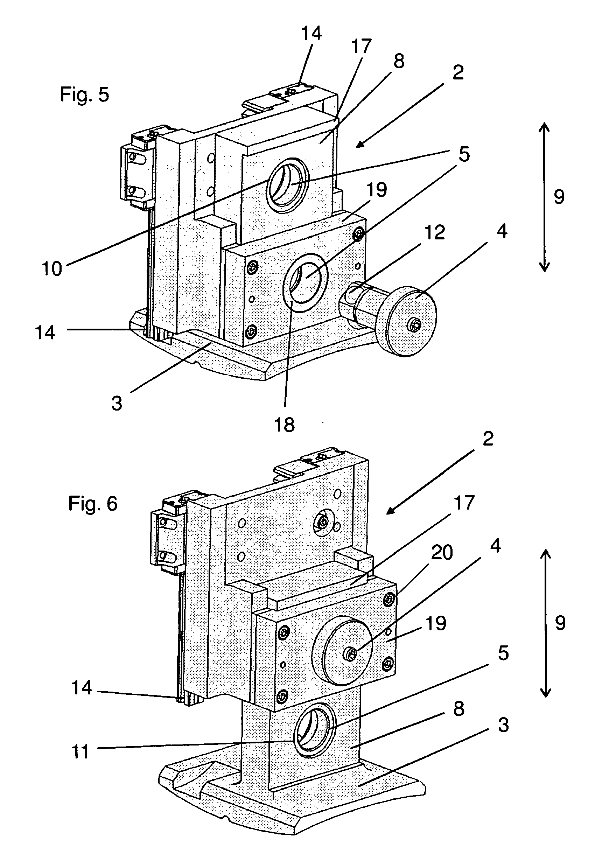

Die Fig. 5 zeigt eine dreidimensionale Darstellung des Segmentträgers 2 mit dem Segment 3 und dem Führungselement 8. Das Segment 3 besitzt auf seiner Rückseite ein quaderförmiges Führungselement 8. Dieses Führungselement 8 ist über eine entsprechende Gleitlagerung im Segmentträger 2 verschiebbar bzw. verfahrbar angeordnet. Im Führungselement 8 sind 2 Öffnungen 5 in Form einer Aufnahmebuchse angeordnet. Die hochfeste Verriegelung erfolgt mit dem Verriegelungselement 4 in Form von einem entsprechenden Verriegelungsbolzen mit einer Kugelsicherung 12. Der Verriegelungsbolzen 4 wird durch die Öffnung 18 im Segmentträger 2 hindurch gesteckt und anschließend mit der dahinterliegenden Aufnahmebuchse am Führungselement 8 fixiert. Das Führungselement 8 ist im Segmentträger 2 in radialer Richtung 9 verschiebbar bzw. verfahrbar. Am oberen Ende des Führungselementes 8 ist ein Anschlag 17 angeordnet, der verhindert, dass das Segment vollständig aus dem Segmentträger 2 herausgezogen werden kann. Auf der Rückseite des Segmentträgers 2 sind 2 Führungsschienen 14 angeordnet. Über diese Führungsschienen 14 wird der Segmentträger 2 mit den darin angeordneten Segmenten in radialer Richtung 9 verfahren, um den Gürtel auf der Gürteltrommel zu greifen.

Die Fig. 6 zeigt den Segmentträger 2 mit dem Segment 3 in der ausgefahrenen zweiten Segmentstellung. Die untere Öffnung 11 im Führungselement 8 ist in dieser Position sichtbar. Das Segment 3 wurde mit dem Führungselement 8 in radialer Richtung 9 im Segmentträger 2 nach unten gefahren. Anschließend erfolgte die Verriegelung mit dem Verriegelungsbolzen 4. Der Segmentträger 2 hat auf seiner vorderen Seite eine demontierbare Platte 19. Diese Platte 19 dient zur Montage und Demontage des Segmentes 9 mit dem Führungselement 8.

Die Fig. 7 zeigt ein weiteres Ausführungsbeispiel, bei dem das Verriegelungselement eine Verriegelungsschraube 6 ist.
Im Führungselement 8 sind wiederum zwei übereinanderliegende Aufnahmebuchsen 7 angeordnet, die mit einem entsprechenden Gewinde versehen sind. Die Verriegelungsschraube 6 wird durch die Öffnung 18 im Segmentträger 2 hindurch gesteckt und anschließend mit der Aufnahmebuchse 7 an Führungselement 8 fixiert. Dadurch wird ebenfalls eine hochfeste Verbindung zwischen dem Segment 3 und dem Segmentträger 2 erreicht.

### Bezugszeichenliste

### (ist Teil der Beschreibung)

- 1: Ringförmige Haltevorrichtung
- 2: Segmentträger
- 3: Segment
- 4: Verriegelungselement in Form eines Verriegelungsbolzen
- 5: Öffnung in Form einer Aufnahmebuchse
- 6: Verriegelungselement in Form eines Verriegelungsschraube
- 7: Öffnung in Form einer Aufnahmebuchse mit Gewinde
- 8: Führungselement am Segment
- 9: Radiale Richtung, bezogen auf die ringförmige Haltevorrichtung
- 10: Obere Öffnung
- 11: Untere Öffnung
- 12: Kugelsicherung
- 13: Antrieb
- 14: Führungsschiene am Segmentträger
- 15: Erste Segmentstellung
- 16: Zweite Segmentstellung
- 17: Anschlag
- 18: Öffnung im Segmentträger
- 19: Platte
- 20: Schrauben

## Patentansprüche

1. Vorrichtung zum Halten und Transportieren eines Reifengürtels für die Herstellung eines Fahrzeugreifens,
wobei die Vorrichtung zumindestens eine ringförmige Haltevorrichtung (1) mit einer Vielzahl von Segmenten (3) zum Halten des Reifengürtels umfasst,
wobei die Segmente (3) jeweils an Segmentträgern (2) angeordnet sind,
wobei die Segmente beim Halten den Reifengürtel koaxial und über die Außenfläche des Reifengürtels ringförmig umfassen,
wobei die Segmente (3) jeweils ein Führungselement (8) aufweisen, wobei das Führungselement (8) in den Segmenttragern (2) in radialer Richtung (9) der ringförmigen Haltevorrichtung (1) verfahrbar sind und in mindestens zwei unterschiedlichen Segmentstellungen durch ein Verriegelungselement (4; 6) fest mit dem jeweiligen Segmentträger fixiert werden, und
wobei die Segmentstellungen unterschiedliche Durchmesserbereiche zum Halten von Reifengürteln für unterschiedliche Reifendimensionen abdecken,
**dadurch gekennzeichnet, daß**
das Führungselement (8) im Wesentlichen die Form eines Quaders aufweist und im Segmentträger (2) in radialer Richtung (9) von einer eingefahrenen Position in eine ausgefahrene Position verfahrbar ist, und daß
im Führungselement (8) eine obere und untere Öffnung (10, 11) zur Aufnahme des Verriegelungselementes (4; 6) angeordnet sind.

2. Vorrichtung nach Anspruch 1,
**dadurch gekennzeichnet, dass**
das Verriegelungselement ein Verriegelungsbolzen (4) ist.

3. Vorrichtung nach einem der vorhergehenden Ansprüche,
**dadurch gekennzeichnet, dass**
der Verriegelungsbolzen (4) eine Kugelsicherung zur Arretierung des Verriegelungsbolzen (4) im Segmentträger (2) aufweist.

4. Vorrichtung nach einem der vorhergehenden Ansprüche,
**dadurch gekennzeichnet, dass**
das Verriegelungselement ein Verriegelungsschraube (6) ist und die Öffnungen (7) im Segmentträger (2) entsprechende Gewindebohrungen aufweisen.

5. Vorrichtung nach einem der vorhergehenden Ansprüche,
**dadurch gekennzeichnet, dass**
an der ringförmigen Haltevorrichtung (1) ein Antrieb (13) angeordnet ist, wobei mit dem Antrieb (13) die Segmentträger (2) mit den Segmenten (3) in radialer Richtung (9) verfahren werden.

6. Vorrichtung nach einem der vorhergehenden Ansprüche,
**dadurch gekennzeichnet, dass**
der Antrieb (13) der Segmentträger (2) zunächst wegabhängig mit einem Motor und anschließend kraftabhängig mit einem pneumatischen Antrieb erfolgt.

7. Vorrichtung nach einem der vorhergehenden Ansprüche,
**dadurch gekennzeichnet, dass**
die Segmentträger (2) Führungsschienen (14) aufweisen,
wobei über diese Führungsschienen (14) die lineare Bewegung der Segmentträger (2) in radialer Richtung (9) geführt wird.

## Claims

1. Device for holding and transporting a tyre belt for producing a vehicle tyre,
the device comprising at least one annular holding device (1) with a multiplicity of segments (3) for holding the tyre belt,
the segments (3) being respectively arranged on segment carriers (2),
the segments enclosing the tyre belt coaxially and in an annular form over the outer surface of the tyre belt when holding,
the segments (3) respectively having a guiding element (8), the guiding elements (8) being movable in the segment carriers (2) in a radial direction (9) of the annular holding device (1) and being securely fixed to the respective segment carrier in at least two different segment positions by a locking element (4; 6) and
the segment positions covering different diameter regions for holding tyre belts for different tyre dimensions,
**characterized in that**
the guiding element (8) has substantially the form of a cuboid and can be moved in the segment carrier (2) in a radial direction (9) from a retracted position into an extended position and **in that** arranged in the guiding element (8) are an upper and lower opening (10, 11) for receiving the locking element (4; 6).

2. Device according to Claim 1,
**characterized in that**
the locking element is a locking bolt (4).

3. Device according to one of the preceding claims,
**characterized in that**
the locking bolt (4) has a ball securing means for arresting the locking bolt (4) in the segment carrier (2).

4. Device according to one of the preceding claims,
**characterized in that**
the locking element is a locking screw (6) and the openings (7) in the segment carrier (2) have corresponding threaded bores.

5. Device according to one of the preceding claims,
**characterized in that**
a drive (13) is arranged on the annular holding device (1), the segment carriers (2) with the segments (3) being moved in a radial direction (9) by the drive (13).

6. Device according to one of the preceding claims,
**characterized in that**
the drive (13) of the segment carriers (2) initially takes place distance-dependently with a motor and subsequently force-dependently with a pneumatic drive.

7. Device according to one of the preceding claims,
**characterized in that**
the segment carriers (2) have guide rails (14), the linear movement of the segment carriers (2) being guided in a radial direction (9) by way of these guide rails (14).

## Revendications

1. Dispositif de maintien et de transport d'une ceinture de bandage de roue en fabrication de bandages de roue pour véhicule,
le dispositif comportant au moins un dispositif annulaire de maintien (1) doté de plusieurs segments (3) qui maintiennent la ceinture de bandage,
chacun des segments (3) étant disposé sur un porte-segment (2) respectif,
les segments englobant coaxialement la ceinture de bandage et formant un anneau sur la surface extérieure de la ceinture de bandage lors de son maintien,
chacun des segments (3) présentant un élément respectif de guidage (8), les éléments de guidage (8) pouvant être déplacés dans les porte-segments (2) dans la direction radiale (9) du dispositif annulaire de maintien (1) et étant relié solidairement au porte-segment respectif en au moins deux positions différentes du segment par un élément de verrouillage (4; 6) et
les positions de segments couvrant différentes parties du diamètre en vue de maintenir des ceintures de bandages prévues pour des bandages de dimensions différentes,
**caractérisé en ce que**
l'élément de guidage (8) présente essentiellement la forme d'un parallélépipède et peut être déplacé dans le porte-segments (2) dans la direction radiale (9) depuis une position rétractée jusque dans une position déployée et
**en ce qu'**une ouverture supérieure et une ouverture inférieure (10, 11) sont disposées dans l'élément de guidage (8) pour reprendre l'élément de verrouillage (4; 6).

2. Dispositif selon la revendication 1, **caractérisé en ce que** l'élément de verrouillage est un goujon de verrouillage (4).

3. Dispositif selon l'une des revendications précédentes, **caractérisé en ce que** le goujon de verrouillage (4) présente une bille de blocage qui bloque le goujon de verrouillage (4) dans le porte-segments (2).

4. Dispositif selon l'une des revendications précédentes, **caractérisé en ce que** l'élément de verrouillage est une vis de verrouillage (6) et **en ce que** les ouvertures (7) prévues dans le porte-segments (2) présentent des alésages filetés correspondants.

5. Dispositif selon l'une des revendications précédentes, **caractérisé en ce qu'**un entraînement (13) est disposé sur le dispositif annulaire de maintien (1), les porte-segments (2) étant déplacés avec les segments (3) dans la direction radiale (9) par l'entraînement (13).

6. Dispositif selon l'une des revendications précédentes, **caractérisé en ce que** l'entraînement (13) des porte-segments (2) s'effectue d'abord en fonction du déplacement à l'aide d'un moteur et ensuite en fonction d'une force à l'aide d'un entraînement pneumatique.

7. Dispositif selon l'une des revendications précédentes, **caractérisé en ce que** les porte-segments (2) présentent des rails de guidage (14), ces rails de guidage (14) guidant le déplacement linéaire des porte-segments (2) dans la direction radiale (9).
